# EUROPÄISCHE PATENTSCHRIFT

(11) **EP 1 919 333 B1**
(45) Veröffentlichungstag und Bekanntmachung des Hinweises auf die Patenterteilung: **03.11.2010**
(21) Anmeldenummer: 06791684.1
(22) Anmeldetag: 26.08.2006
(51) Int. Cl.: A47J 31/44

(54) **VERFAHREN ZUM STEUERN EINER WÄRMEEINRICHTUNG SOWIE SYSTEM ZUR DURCHFÜHRUNG DES VERFAHRENS**
METHOD FOR CONTROLLING A HEATING DEVICE AND SYSTEM FOR CARRYING OUT SAID METHOD
PROCEDE POUR ASSURER LA COMMANDE D'UN DISPOSITIF DE CHAUFFAGE ET SYSTEME POUR METTRE LEDIT PROCEDE EN OEUVRE

(30) Priorität: 01.09.2005 DE 102005041776
(43) Veröffentlichungstag der Anmeldung: 14.05.2008
(73) Patentinhaber: Miele & Cie. KG, 33332 Gütersloh (DE)
(72) Erfinder: ERDMANN, Torsten, 59269 Beckum (DE); LIEMKE, Frank, 33330 Gütersloh (DE); MÜLLER, Diana, 33332 Gütersloh (DE); NATTKEMPER, Jörg, 59065 Hamm (DE); NIEHAUS, Detlef, 59067 Hamm (DE); POHLMANN, Verena, 1090 Bruxelles (BE); VAN PELS, Ulrich, 33378 Rheda-Wiedenbrück (DE)
(86) Internationale Anmeldenummer: PCT/EP2006/008392
(87) Internationale Veröffentlichungsnummer: WO 2007/025688

(56) Entgegenhaltungen:
- EP-A- 0 808 599
- DE-C1- 4 139 804
- US-A- 6 135 010

## Beschreibung

Die Erfindung betrifft ein Verfahren zum Steuern einer Wärmeeinrichtung zum Erwärmen von Geschirr, Gläsern oder dergleichen sowie ein System zur Durchführung des Verfahrens.

Ein derartiges Verfahren sowie System ist beispielsweise aus der EP 0 808 599 A1 bekannt. Die EP 0 808 599 A1 beschreibt ein Haushaltgerät, bestehend aus einem Wasserkocher mit einer Wärmeeinrichtungen, das über eine Zeitschalteinrichtung in Betrieb gesetzt werden kann. Wasserkocher und Wärmeeinrichtungen können zeitgleich in Betrieb genommen werden. Es ist auch möglich über die Zeitschalteinrichtung entweder nur den Wasserkocher oder nur die Wärmeeinrichtungen in Betrieb zu nehmen. Eine zeitversetzte Inbetriebnahme von Wärmeeinrichtungen und Wasserkocher ist über die Zeitschalteinrichtungen nicht möglich.

Die DE 41 39 804 C1 beschreibt ein Verfahren zum Steuern einer Wärmeeinrichtung zum Erwärmen von Kaffeetassen auf einer Kaffeemaschine, wobei die Wärmeeinrichtung mit der Kaffeemaschine ein System bildet. Die Wärmeeinrichtung wird in Abhängigkeit des Betriebszustands der Kaffeemaschine gesteuert.

Darüber hinaus ist aus der US 6,191,391 B1 ein System bestehend aus einem Herd und einer darin integrierten Wärmeschublade bekannt. Das Heizelement der Wärmeschublade wird bei Bedarf über einen an dem Herd angeordneten Drehknebel manuell eingeschaltet. Sobald sich der Herd im Pyrolysebetrieb befindet, wird das Heizelement der Wärmeschublade automatisch ausgeschaltet.

Die zuvor beschriebenen Wärmeeinrichtungen sind jeweils Bestandteil bzw. bilden eine integrierte Baugruppe des Haushaltsgeräts.

Der Erfindung stellt sich somit das Problem ein Verfahren zum Steuern einer als separates Einbaugerät ausgebildeten Wärmeeinrichtung anzugeben, durch das der Benutzerkomfort weiter verbessert ist.

Erfindungsgemäß wird dieses Problem durch ein Verfahren mit den Merkmalen des Patentanspruchs 1 gelöst. Eine vorteilhafte Ausgestaltungen und Weiterbildungen der Erfindung ergibt sich aus dem Unteranspruch 2.

Die mit der Erfindung erreichbaren Vorteile bestehen neben einer Verbesserung des Benutzerkomforts insbesondere darin, dass dadurch die Qualität der servierten Getränke und Speisen verbessert wird. Dies ist insbesondere dann von Vorteil, wenn zwischen dem Aufbereiten oder Zubereiten der Getränke oder Speisen und deren Verzehr eine längere Zeitspanne liegt.

Da das Heizelement der Wärmeeinrichtung mittels der Auswahl eines in der Zukunft liegenden Einschaltzeitpunkts an dem Haushaltsgerät, zu dem das Haushaltsgerät von einem Standby-Zustand in den Einschaltzustand überführt wird, automatisch eingeschaltet wird ist es möglich, die Wärmeeinrichtung bereits vor der vollständigen Inbetriebnahme des Haushaltsgeräts einzuschalten, so dass die Wärmeeinrichtung mit dem Einschalten des Haushaltsgeräts bereits genutzt werden kann.

Ein besonderer Vorteil der Erfindung besteht darin, dass das Heizelement der Wärmeeinrichtung zeitlich nach der Auswahl des Einschaltzeitpunkts des Haushaltsgeräts und zeitlich vor diesem Einschaltzeitpunkt eingeschaltet wird. Dies ist beispielsweise dann von Vorteil, wenn Geschirr, wie Tassen oder dergleichen, vorgewärmt werden sollen, so dass warme Getränke oder Speisen vor dem Verzehr nicht auf ungewünschte Weise auskühlen.

Eine vorteilhafte Weiterbildung der erfindungsgemäßen Lehre sieht vor, dass das Heizelement der Wärmeeinrichtung zeitlich nach der Auswahl eines in der Zukunft liegenden Ausschaltzeitpunkts des Haushaltsgeräts an dem Haushaltsgerät und zeitlich vor diesem Ausschaltzeitpunkt automatisch ausgeschaltet wird. Auf diese Weise ist die Bedienung der Wärmeeinrichtung vereinfacht und damit der Benutzerkomfort weiter verbessert.

Ferner stellt sich der Erfindung das Problem ein System zur Durchführung eines der vorgenannten Verfahren anzugeben.

Erfindungsgemäß wird dieses Problem durch ein System mit den Merkmalen des Patentanspruchs 3 gelöst. Vorteilhafte Ausgestaltungen und Weiterbildungen der Erfindung ergeben sich aus den Unteransprüchen 4 bis 6.

Ein besonderer Vorteil der Erfindung besteht darin, dass die Zeitspanne zwischen dem Einschalten des Heizelements der Wärmeeinrichtung und dem Einschaltzeitpunkt des Haushaltsgeräts zeitlich vorher an dem Haushaltsgerät oder der Wärmeeinrichtung einstellbar ist. Hierdurch ist der Benutzerkomfort verbessert. Je nach subjektivem Empfinden kann der Benutzer so den Aufheizgrad der Wärmeeinrichtung auf einfache Weise beeinflussen.

Eine vorteilhafte Weiterbildung sieht vor, dass die Zeitspanne zwischen dem Ausschalten des Heizelements der Wärmeeinrichtung und dem Ausschaltzeitpunkt des Haushaltsgeräts zeitlich vorher an dem Haushaltsgerät oder der Wärmeeinrichtung einstellbar ist. Hierdurch erhält der Benutzer zusätzlich die Möglichkeit, diese Zeitspanne nach subjektivem Empfinden einzustellen. Darüber hinaus kann der Benutzer somit auch den Energieverbrauch der Wärmeeinrichtung in gewünschter Weise beeinflussen.

Durch die Möglichkeit, das Heizelement der Wärmeeinrichtung mittels eines Bedienelements der Wärmeeinrichtung unabhängig von den zeitlich vor dem Betätigen des Bedienelements an dem Haushaltsgerät vorgenommenen Einstellungen ausschalten zu können, ist der Benutzer in die Lage versetzt, den erfindungsgemäßen Automatismus, sofern gewünscht, abzustellen.

Die gleiche Zielsetzung liegt der Weiterbildung des erfindungsgemäßen Systems zugrunde, dass das Haushaltsgerät ein Bedienelement aufweist, mittels dessen das Haushaltsgerät unabhängig von den zeitlich vor dem Betätigen des Bedienelements an dem Haushaltsgerät vorgenommenen Einstellungen manuell vollständig ausschaltbar ist. Auf diese Weise ist die Wärmeeinrichtung indirekt ausschaltbar.

Ein Ausführungsbeispiel der Erfindung ist in den Zeichnungen rein schematisch dargestellt und wird nachfolgend näher beschrieben. Es zeigt
- Figur 1: ein Blockschaltbild eines ersten Ausführungsbeispiels,
- Figur 2: ein Blockschaltbild eines zweiten Ausführungsbeispiels und
- Figur 3: ein Blockschaltbild eines dritten Ausführungsbeispiels.

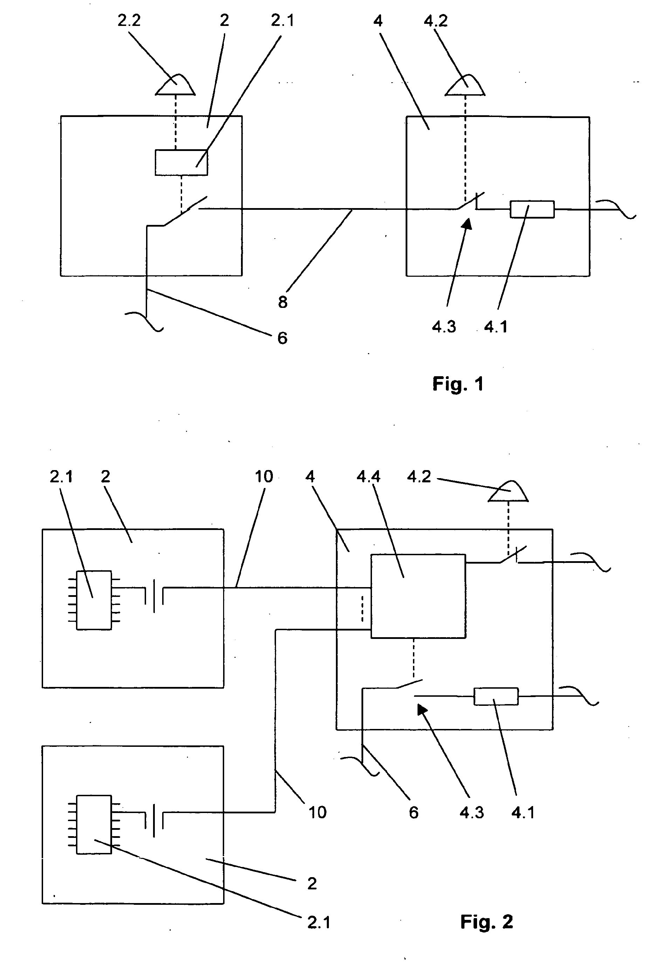

In Fig. 1 ist ein erstes Ausführungsbeispiel der Erfindung grob schematisch dargestellt. Das erfindungsgemäße System weist ein als Getränkebereiter ausgebildetes Haushaltsgerät 2 und eine als Wärmeschublade ausgebildete Wärmeeinrichtung 4 auf. Bei dem Getränkebereiter 2 handelt es sich um einen Kaffeeautomaten, der als Einbaugerät ausgebildet ist. Die Wärmeschublade 4 ist ebenfalls als Einbaugerät ausgebildet und dient zum Erwärmen bzw. Warmhalten von Geschirr, insbesondere von Kaffeetassen. Bei diesem Ausführungsbeispiel weist das Haushaltsgerät 2 eine durch die Steuerung 2.1 des Haushaltsgeräts 2 schaltbare und in der Fig. nicht dargestellte Steckdose auf, die mit dem elektrischen Stromnetz 6 verbunden ist. Das als Strahlungsheizkörper ausgebildete Heizelement 4.1 der Wärmeeinrichtung 4 ist über ein Netzanschlusskabel 8 mit der schaltbaren Steckdose des Haushaltsgeräts 2 verbunden. Darüber hinaus weist die Wärmeeinrichtung 4 ein von außen betätigbares Bedienelement 4.2 auf, mittels dessen die Stromzufuhr zu dem Heizelement 4.1 ebenfalls unterbrochen werden kann. In der Fig. sind sowohl der Schalter der schaltbaren Steckdose wie auch der durch das Bedienelement 4.2 betätigbare Schalter 4.3 in deren jeweiliger Ruhelage dargestellt, wobei die Stromzufuhr von dem elektrischen Stromnetz 6 über das Netzanschlusskabel 8 zu dem Heizelement 4.1 unterbrochen ist.

Bei dem vorliegenden Ausführungsbeispiel handelt es sich um ein System, bei dem das Haushaltsgerät 2 neben einem Ausschaltzustand, in dem das Haushaltsgerät 2 vollständig ausgeschaltet ist, und einem Einschaltzustand, in dem das Haushaltsgerät 2 vollständig eingeschaltet ist, so dass alle Funktionen des Haushaltsgeräts 2 zur Verfügung stehen, zusätzlich in einen Standby-Zustand automatisch oder manuell überführbar ist. In diesem sog. stand - Boy Zustand stehen nicht alle Funktionen des Haushaltsgeräts 2 zur Verfügung. Insbesondere stehen hier nicht die Hauptfunktionen zum Zubereiten von Kaffee zur Verfügung. In dem Einschaltzustand hat der Benutzer die Möglichkeit, einen in der Zukunft liegenden Einschaltzeitpunkt auszuwählen, zu dem das Haushaltsgerät 2 dann, sobald es in den Standby-Zustand überführt worden ist, nachfolgend wieder in den Einschaltzustand überführt wird. Hierfür ist in der Steuerung 2.1 ein an sich bekanntes Zeitglied integriert, mittels dessen täglich zu dem eingestellten Einschaltzeitpunkt ein Steuersignal zur Überführung des Haushaltsgeräts 2 in den Einschaltzustand erzeugt wird.

Die Funktionsweise des vorliegenden Ausführungsbeispiels wird nachfolgend anhand der Fig. 1 näher erläutert.

Das als Getränkebereiter ausgebildete Haushaltsgerät 2 und die als Geschirrwärmer ausgebildete Wärmeeinrichtung 4 sind ausgeschaltet, wobei sich der durch das Bedienelement 4.2 betätigbare Schalter 4.3 in der in Fig. 1 dargestellten Ruhelage befindet. Der Benutzer schaltet das Haushaltsgerät 2 mittels eines an diesem angeordneten und als Hauptschalter ausgebildeten Bedienelements 2.2 ein. Die Steuerung 2.1 des Haushaltsgeräts 2 ist derart ausgebildet, dass gleichzeitig mit dem Einschalten des Haushaltsgeräts 2 der Schalter der schaltbaren Steckdose von der in Fig. 1 dargestellten Ruhelage in die Schließlage überführt wird, so dass das Heizelement 4.1 der Wärmeeinrichtung 4 mit dem elektrischen Stromnetz 6 verbunden ist. Das Heizelement 4.1 heizt das Innere der Wärmeeinrichtung 4 auf, so dass darin eingestelltes Geschirr vorgewärmt wird. Nachdem der Getränkebereiter 2 betriebsbereit ist, kann der Benutzer einen Kaffee in eine dann vorgewärmte Tasse zapfen.

Der Benutzer kann bei diesem Getränkebereiter 2 auch einen zukünftigen Einschaltpunkt mittels an dem Getränkebereiter 2 angeordneter, in Fig. 1 nicht dargestellter Bedien- und Anzeigeelemente auswählen und festlegen, zu dem sich der Getränkebereiter 2 nach der Überführung in den Standby-Zustand wiederum einschaltet. Hierfür sind die Bedien- und Anzeigeelemente auf an sich bekannte Weise mit der Steuerung des Getränkebereiters 2 signalübertragend verbunden. Darüber hinaus kann der Benutzer über die Bedien- und Anzeigeelemente eine Zeitspanne auswählen und festlegen, um die sich das Heizelement 4.1 der Wärmeeinrichtung 4 früher als der Getränkebereiter 2 einschalten soll.

Auch besteht für den Benutzer die Möglichkeit, über die Bedien- und Anzeigeelemente, ähnlich dem Einschaltzeitpunkt, auch einen in der Zukunft liegenden Ausschaltzeitpunkt für den Getränkebereiter 2 auszuwählen und festzulegen. Analog zu dem Einschalten des Heizelements 4.1 der Wärmeeinrichtung 4 kann der Benutzer über die Bedien- und Anzeigeelemente auch eine Zeitspanne auswählen und festlegen, um die sich das Heizelement 4.1 früher als der Getränkebereiter 2 ausschaltet.

Die vorgenannten Einstellungen bezüglich des Ein- und Ausschaltzeitpunkts des Getränkebereiters 2 wie auch des Ein- und Ausschaltens des Heizelements 4.1 der Wärmeeinrichtung 4, die durch den Benutzer mittels der Bedien- und Anzeigeelemente des Getränkebereiters 2 vorgenommen worden sind, werden in einem Speicher der Steuerung 2.1 abgespeichert und von der Steuerung 2.1 des Getränkebereiters 2 solange für den Betrieb des Getränkebereiters 2 und der Wärmeeinrichtung 4 verwendet, bis dass der Benutzer die Einstellungen wieder verändert.

Während der Getränkebereiter 2 und das Heizelement 4.1 der Wärmeeinrichtung 4 eingeschaltet sind, kann der Benutzer durch Betätigung des Bedienelements 4.2 die oben genannte Automatik außer Kraft setzen und das Heizelement 4.1 unabhängig von den vorherigen Einstellungen an dem Getränkebereiter 2 manuell ausschalten. Sobald der vorher festgelegte und in der Steuerung 2.1 hinterlegte Ausschaltzeitpunkt für den Getränkebereiter 2 erreicht ist, wird dieser von dem Einschaltzustand in den Standby-Zustand überführt. Hierdurch wird der mittels des Bedienelements 4.2 betätigbare Schalter 4.3 wiederum in dessen Ruhelage, siehe Fig. 1, überführt. Sobald der Einschaltzeitpunkt für den Getränkebereiter 2 erneut erreicht ist, wird dieser automatisch von dem Standby-Zustand in den Einschaltzustand überführt. Sofern der Benutzer, wie bereits erläutert, eine Zeitspanne ausgewählt und festgelegt hat, um die das Heizelement 4.1 vor dem Einschaltzeitpunkt des Getränkebereiters 2 eingeschaltet werden soll, ist die Wärmeeinrichtung 4 entsprechend aufgeheizt und darin eingestelltes Geschirr bereits vorgewärmt. Ist von dem Benutzer hierfür keine Zeitspanne festgelegt worden, wird das Heizelement 4.1 mit der Überführung des Getränkebereiters 2 von dem Standby-Zustand in den Einschaltzustand automatisch eingeschaltet.

Schaltet der Benutzer den Getränkebereiter 2 im Unterschied zu oben mittels des Hauptschalters 2.2 vollständig aus, so schalten sich sowohl der Getränkebereiter 2 wie auch das Heizelement 4.1 der Wärmeeinrichtung 4 nicht automatisch wieder ein. Getränkebereiter 2 und Heizelement 4.1 werden erst dann wieder eingeschaltet, wenn der Hauptschalter 2.2 erneut betätigt wird. Da die vorher vorgenommenen Einstellungen an dem Getränkebereiter 2 bezüglich des täglichen Ein- und Ausschaltzeitpunkts für den Getränkebereiter 2 in einem Speicher der Steuerung 2.1 abgespeichert sind, werden diese für die Steuerung des Getränkebereiters 2 wieder verwendet, sobald der Getränkebereiter 2 erneut in den Standby-Zustand überführt worden ist.

Bei dem vorliegenden Ausführungsbeispiel ist die Verwendung eines speziellen Schalters 4.3 erforderlich, da dieser nach der Überführung des Getränkebereiters 2 von dem Einschaltzustand in den Standby-Zustand selbsttätig in die Ruhelage fährt. Grundsätzlich ist es jedoch auch denkbar, dass der Schalter 4.3 als ein herkömmlicher Schalter ausgebildet ist. In diesem Fall wäre es jedoch erforderlich, den Schalter 4.3 mittels einer Betätigung des Bedienelements 4.2 manuell wieder in die Ruhelage zu überführen. Hierdurch ist es möglich, eine ansonsten herkömmlich aufgebaute Wärmeeinrichtung 4 in Abhängigkeit des Betriebszustands des Getränkebereiters 2 automatisch einzuschalten.

Ferner wäre es denkbar, dass die Wärmeeinrichtung 4 zusätzlich zu der Stromversorgung über den Getränkebereiter 2 an eine weitere Stromversorgung direkt angeschlossen ist. Auf diese Weise wäre das Heizelement 4.1 der Wärmeeinrichtung 4 sowohl in Abhängigkeit des Getränkebereiters 2 wie auch unabhängig von dem Getränkebereiter 2 einschaltbar.

In Fig. 2 ist ein zweites Ausführungsbeispiel dargestellt. Im Unterschied zu dem ersten Ausführungsbeispiel wird hier das Heizelement 4.1 der Wärmeeinrichtung 4 von zwei Haushaltsgeräten 2, nämlich einem Getränkebereiter und einem Herd, gesteuert. Die Steuerungen 2.1 der Haushaltsgeräte 2 sind jeweils über Sicherheits-Kleinspannungsleitungen 10 signalübertragend mit einer Steuerung 4.4 der Wärmeeinrichtung 4 verbunden. Ferner ist das Bedienelement 4.2 mit der Steuerung 4.4 signalübertragend verbunden. Die Steuerung 4.4 betätigt in Abhängigkeit der Signale von den Haushaltsgeräten 2 und von dem Bedienelement 4.2 den Schalter 4.3, so dass das Heizelement 4.1 mit dem elektrischen Stromnetz 6 elektrisch leitend verbunden ist oder nicht. Aufgrund der hier verwendeten Sicherheits-Kleinspannungsleitungen 10 ist die Verdrahtung zwischen den Haushaltsgeräten 2 und der Wärmeeinrichtung 4 bei dem zweiten Ausführungsbeispiel einfacher. Ansonsten entspricht dieses Ausführungsbeispiel dem ersten Ausführungsbeispiel.

Anstelle der Sicherheits-Kleinspannung wäre es grundsätzlich auch denkbar, Netzspannung zu verwenden.

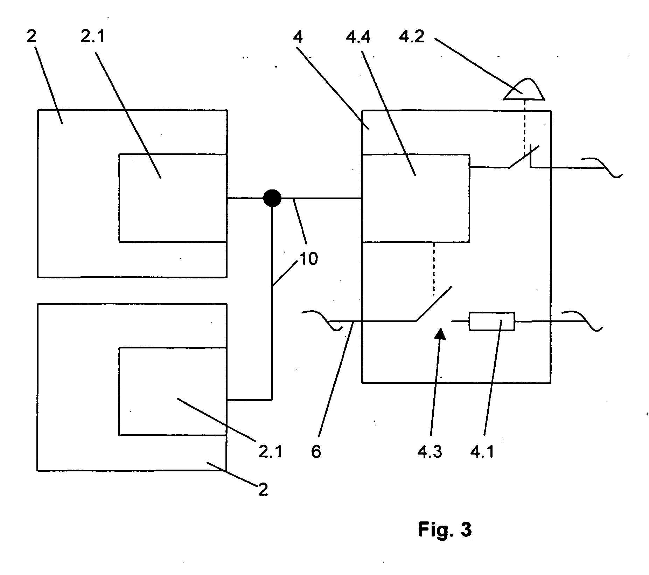

Ein drittes Ausführungsbeispiel ist in Fig. 3 gezeigt. Im Unterschied zu dem zweiten Ausführungsbeispiel wird bei diesem Ausführungsbeispiel für den Signalaustausch anstelle der Sicherheits-Kleinspannungsleitungen zwischen den Haushaltsgeräten 2 und der Wärmeeinrichtung 4 eine elektrische Stromzufuhrleitung 10 auf an sich bekannte Weise verwendet. Hierdurch ist es möglich, ein in den Geräten 2 und 4 vorhandenes System zur Signalübertragung mittels der elektrischen Stromzufuhrleitung 10 gleichzeitig für das erfindungsgemäße Verfahren zu nutzen, so dass der Verdrahtungsaufwand und damit die Herstellungskosten weiter reduziert sind.

Die Erfindung ist nicht auf die erläuterten Ausführungsbeispiele beschränkt. Beispielsweise ist das erfindungsgemäße Verfahren auch bei anderen geeigneten Haushaltsgeräten zur Aufbereitung oder Zubereitung von Getränken oder Nahrungsmitteln und Wärmeeinrichtungen, insbesondere Speisenwärmer, verwendbar. Darüber hinaus sind auch andere dem Fachmann bekannte und geeignete Heizelemente möglich.

## Patentansprüche

1. Verfahren zum Steuern einer Wärmeeinrichtung (4) zum Erwärmen von Geschirr, Gläsern oder dergleichen, wobei die Wärmeeinrichtung (4) ein System mit mindestens einem anderen Haushaltsgerät (2) bildet, das zur Aufbereitung oder Zubereitung von Getränken oder Nahrungsmitteln dient, wobei die Wärmeeinrichtung (4) in Abhängigkeit des Betriebszustands des anderen Haushaltsgeräts (2) gesteuert wird und dass ein Heizelement (4.1) der Wärmeeinrichtung (4) in Abhängigkeit des Einschaltens des Haushaltsgeräts (2) automatisch eingeschaltet wird, wobei das Heizelement (4.1) der Wärmeeinrichtung (4) mittels der Auswahl eines in der Zukunft liegenden Einschaltzeitpunkts an dem Haushaltsgerät (2), zu dem das Haushaltsgerät (2) von einem Standby-Zustand in den Einschaltzustand überführt wird, automatisch eingeschaltet wird,
**dadurch gekennzeichnet,**
**dass** das Heizelement (4.1) der Wärmeeinrichtung (4) zeitlich nach der Auswahl des Einschaltzeitpunkts des Haushaltsgeräts (2) und zeitlich vor diesem Einschaltzeitpunkt eingeschaltet wird.

2. Verfahren nach Anspruch 1,
**dadurch gekennzeichnet,**
**dass** das Heizelement (4.1) der Wärmeeinrichtung (4) zeitlich nach der Auswahl eines in der Zukunft liegenden Ausschaltzeitpunkts des Haushaltsgeräts (2) an dem Haushaltsgerät (2) und zeitlich vor diesem Ausschaltzeitpunkt automatisch ausgeschaltet wird.

3. System, bestehend aus mindestens einem Haushaltsgerät (2), insbesondere einem Getränkebereiter, und einer Wärmeeinrichtung (4), insbesondere einem Geschirrwärmer oder einem Speisenwärmer, zur Durchführung eines Verfahrens nach einem der vorgenannten Ansprüche, wobei das Haushaltsgerät (2) eine durch die Steuerung (2.1) des Haushaltsgerätes (2) schaltbare Steckdose aufweist, die mit dem elektrischen Stromnetz (6) verbunden ist und wobei das Heizelement (4.1) der Wärmeeinrichtung (4) über ein Netzanschlusskabel (8) mit der schaltbaren Steckdose des Haushaltgerätes (2) verbunden ist,
**dadurch gekennzeichnet,**
**dass** die Zeitspanne zwischen dem Einschalten des Heizelements (4.1) der Wärmeeinrichtung (4) und dem Einschaltzeitpunkt des Haushaltsgeräts (2) zeitlich vorher an dem Haushaltsgerät (2) oder der Wärmeeinrichtung (4) einstellbar ist.

4. System nach Anspruch 3,
**dadurch gekennzeichnet,**
**dass** die Zeitspanne zwischen dem Ausschalten des Heizelements (4.1) der Wärmeeinrichtung (4) und dem Ausschaltzeitpunkt des Haushaltsgeräts (2) zeitlich vorher an dem Haushaltsgerät (2) oder der Wärmeeinrichtung (4) einstellbar ist.

5. System nach einem der Ansprüche 3 oder 4,
**dadurch gekennzeichnet,**
**dass** die Wärmeeinrichtung (4) ein Bedienelement (4.2) aufweist, mittels dessen das Heizelement (4.1) der Wärmeeinrichtung (4) unabhängig von den zeitlich vor dem Betätigen des Bedienelements (4.2) an dem Haushaltsgerät (2) vorgenommenen Einstellungen ausschaltbar ist.

6. System nach einem der Ansprüche 3 bis 5,
**dadurch gekennzeichnet,**
**dass** das Haushaltsgerät (2) ein Bedienelement (2.2) aufweist, mittels dessen das Haushaltsgerät (2) unabhängig von den zeitlich vor dem Betätigen des Bedienelements (2.2) an dem Haushaltsgerät (2) vorgenommenen Einstellungen manuell vollständig ausschaltbar ist.

## Claims

1. Method for controlling a warming device (4) for warming crockery, glasses or the like, the warming device (4) forming a system comprising at least one other household appliance (2) used for processing or preparing beverages or food, the warming device (4) being controlled according to the operational state of the other household appliance (2) and one heating element (4.1) of the warming device (4) being activated automatically depending on the activation of the household appliance (2), the heating element (4.1) of the warming device (4) being activated automatically via the selection of a future activation time on the household appliance (2), at which time the household appliance (2) is switched from a standby state to the activated state,
**characterised in that**
the heating element (4.1) of the warming device (4) is activated at a point in time subsequent to the selection of the activation time of the household appliance (2) and prior to this activation time.

2. Method according to claim 1,
**characterised in that**
the heating element (4.1) of the warming device (4) is deactivated automatically at a point in time subsequent to the selection of a future deactivation time of the household appliance (2) on the household appliance (2) and prior to this deactivation time.

3. System consisting of at least one household appliance (2), in particular a device for preparing beverages, and a warming device (4), in particular a crockery warmer or a food warmer, for carrying out a method according to any one of the preceding claims, the household appliance (2) comprising a power outlet which is switchable via the control (2.1) of the household appliance (2), which power point is connected to the electrical mains supply (6), and the heating element (4.1) of the warming device (4) being connected to the switchable power point of the household appliance (2) via a power supply cable (8),
**characterised in that**
the time interval between the activation of the heating element (4.1) of the warming device (4) and the activation time of the household appliance (2) can be set beforehand on the household appliance (2) or the warming device (4).

4. System according to claim 3,
**characterised in that**
the time interval between the deactivation of the heating element (4.1) of the warming device (4) and the deactivation time of the household appliance (2) can be set beforehand on the household appliance (2) or the warming device (4).

5. System according to either claim 3 or claim 4,
**characterised in that**
the warming device (4) comprises an operator's control (4.2), by means of which the heating element (4.1) of the warming device (4) can be deactivated independently of the settings made on the household appliance (2) prior to the operator's control (4.2) being operated.

6. System according to any one of claims 3 to 5,
**characterised in that**
the household appliance (2) comprises an operator's control (2.2), by means of which the household appliance (2) can be fully deactivated manually and independently of the settings made on the household appliance (2) prior to the operator's control (4.2) being operated.

## Revendications

1. Procédé de commande d'un équipement thermique (4) destiné à chauffer de la vaisselle, des verres ou objets similaires, l'équipement thermique (4) formant un système avec au moins un autre appareil ménager (2) qui sert à traiter ou à préparer des boissons ou des aliments, l'équipement thermique (4) étant commandé en fonction de l'état opérationnel de l'autre appareil ménager (2), et un élément chauffant (4.1) de l'équipement thermique (4) étant automatiquement mis en circuit en fonction de la mise en circuit de l'appareil ménager (2), l'élément chauffant (4.1) de l'équipement thermique (4) étant mis en circuit automatiquement au moyen de la sélection d'un moment de mise en circuit sur l'appareil ménager (2), moment situé dans le futur auquel l'appareil ménager (2) est conduit d'un état de veille à l'état de mise en circuit,
**caractérisé en ce que**
l'élément chauffant (4.1) de l'équipement thermique (4) est mis en circuit chronologiquement après la sélection du moment de mise en circuit de l'appareil ménager (2) et chronologiquement avant ce moment de mise en circuit.

2. Procédé selon la revendication 1,
**caractérisé en ce que**
l'élément chauffant (4.1) de l'équipement thermique (4) est mis hors circuit chronologiquement après la sélection d'un moment de mise hors circuit, situé dans le futur, de l'appareil ménager (2) sur l'appareil ménager (2) et est automatiquement mis hors circuit chronologiquement avant ce moment de mise hors circuit.

3. Système, composé au moins d'un appareil ménager (2), en particulier un préparateur de boissons, et d'un équipement thermique (4), en particulier un chauffe-vaisselle ou un chauffe-aliments, pour la réalisation d'un procédé selon une des revendications précitées, l'appareil ménager (2) présentant une prise de courant commutable par la commande (2.1) de l'appareil ménager (2) et qui est raccordée au courant électrique du secteur (6), et l'élément chauffant (4.1) de l'équipement thermique (4) étant raccordé par le biais d'un câble de connexion de secteur (8) à la prise commutable de l'appareil ménager (2),
**caractérisé en ce que**
la période de temps entre la mise en circuit de l'élément chauffant (4.1) de l'équipement thermique (4) et le moment de mise en circuit de l'appareil ménager (2) peut être réglé chronologiquement auparavant sur l'appareil ménager (2) ou sur l'équipement thermique (4).

4. Système selon la revendication 3,
**caractérisé en ce que**
la période de temps entre la mise hors circuit de l'élément chauffant (4.1) de l'équipement thermique (4) et le moment de mise hors circuit de l'appareil ménager (2) peut être réglé chronologiquement auparavant sur l'appareil ménager (2) ou sur l'équipement thermique (4).

5. Système selon une des revendications 3 ou 4,
**caractérisé en ce que**
l'équipement thermique (4) présente un élément de manoeuvre (4.2) au moyen duquel l'élément chauffant (4.1) de l'équipement thermique (4) peut être mis hors circuit indépendamment des réglages effectués chronologiquement avant l'actionnement de l'élément de manoeuvre (4.2) sur l'appareil ménager (2).

6. Système selon une des revendications 3 à 5,
**caractérisé en ce que**
l'appareil ménager (2) présente un élément de manoeuvre (2.2) au moyen duquel l'appareil ménager (2) peut être complètement mis hors circuit de façon manuelle indépendamment des réglages effectués chronologiquement avant l'actionnement de l'élément de manoeuvre (2.2) sur l'appareil ménager (2).
